# FASCICULE DE BREVET EUROPEEN

(11) **EP 4 334 159 B1**
(45) Date de publication et mention de la délivrance du brevet: **10.09.2025**
(21) Numéro de dépôt: 22727112.9
(22) Date de dépôt: 03.05.2022
(51) Int. Cl.: B64C 25/42, F16D 63/00, B64C 25/44, B60T 8/17

(54) **DISPOSITIF DE FREINAGE MAGNETIQUE A COURANT DE FOUCAULT, ROUE FREINEE DE VEHICULE ET ATTERRISSEUR D'AERONEF EQUIPE D'UNE TELLE ROUE**
MAGNETISCHE BREMSVORRICHTUNG MIT WIRBELSTROM, BREMSRAD EINES FAHRZEUGS UND LANDEGERÄT EINES FLUGZEUGS MIT EINEM SOLCHEN RAD
MAGNETIC EDDY CURRENT BRAKING DEVICE, BRAKED VEHICLE WHEEL AND AIRCRAFT LANDING GEAR EQUIPPED WITH SUCH A WHEEL

(30) Priorité: 03.05.2021 FR 2104657
(43) Date de publication de la demande: 13.03.2024
(73) Titulaire: Safran Landing Systems, 78140 Vélizy-Villacoublay (FR)
(72) Inventeur: NGUYEN, Duy-Minh, 77550 MOISSY-CRAMAYEL (FR); DURAND, Guillaume, 77550 MOISSY-CRAMAYEL (FR); KLIM, Graeme, 77550 MOISSY-CRAMAYEL (FR)
(74) Mandataire: Cabinet Boettcher
(86) Numéro de dépôt international: PCT/EP2022/061840
(87) Numéro de publication internationale: WO 2022/233863

(56) Documents cités:
- EP-A1- 3 309 944
- CN-A- 105 591 523
- CN-A- 106 081 148
- CN-A- 111 900 855
- US-A1- 2007 000 741
- US-A1- 2020 300 310
- WIKIPEDIA: "Eddy current", 8 March 2018 (2018-03-08), XP055466757, Retrieved from the Internet <URL:file:///C:/Users/dw53325/AppData/Local/Temp/Eddy_current.pdf> [retrieved on 20180412]

## Description

La présente invention concerne le domaine du freinage des roues de véhicule telles que les roues d'aéronef.

### ARRIERE PLAN DE L'INVENTION

Une roue d'aéronef comprend généralement une jante reliée par un voile à un moyeu monté pour tourner sur un arbre (essieu ou fusée) support de roue.

Il est connu des dispositifs de freinage par friction comprenant une pile de disques de freinage qui est logée dans un espace s'étendant entre la jante et le moyeu et qui comprend une alternance de disques rotoriques liés en rotation avec la roue et de disques statoriques fixes par rapport au support de roue. Le dispositif de freinage comprend également des actionneurs hydrauliques ou électromécaniques montés sur un porte-actionneurs et agencés pour appliquer un effort de freinage commandé sur la pile de disques de manière à freiner la rotation de la roue.

Il a été proposé, notamment dans le document FR-A-2953196, d'équiper de telles roues freinées d'un frein auxiliaire électromagnétique assurant une dissipation d'énergie par d'autres moyens que la friction mécanique.

Sont en outre connus des dispositifs de freinage magnétique à courant de Foucault (dénommé « Eddy curent » en anglais) utilisés pour le freinage de roues de véhicules et plus particulièrement de roues d'aéronef. Le document WO-A-2014/029962 décrit un tel dispositif comprenant un rotor qui est pourvu d'un ou plusieurs aimants et qui est monté en regard d'un stator électromagnétique.

Le document US-A-20200300310 décrit lui aussi un dispositif de freinage magnétique à courant de Foucault.

Il est par ailleurs connu du document EP-A-3309944 un frein à courant de Foucault comprenant des aimants ayant des largeurs différentes.

D'une manière générale, les performances d'un dispositif de freinage magnétique à courant de Foucault dépendent de la puissance des aimants utilisés et de leurs dimensions. Le dispositif de freinage est donc relativement lourd et encombrant lorsque la puissance maximale de freinage requise est importante. Tel est le cas par exemple d'une utilisation sur avion, alors même que la masse et l'encombrement sont des contraintes sévères pour cette utilisation.

### OBJET DE L'INVENTION

L'invention a notamment pour but de proposer un dispositif de freinage magnétique à courant de Foucault remédiant au moins en partie aux inconvénients précités.

### RESUME DE L'INVENTION

A cet effet, on prévoit, selon l'invention un dispositif de freinage magnétique à courant de Foucault, comprenant au moins un élément fixe et un élément mobile par rapport à l'élément fixe selon une direction de déplacement en ayant une surface en regard d'une surface de l'élément fixe, l'un des éléments comportant une pluralité d'aimants apte à engendrer dans l'autre des éléments, réalisé en matériau électriquement conducteur, des courants de Foucault, lorsque les deux éléments sont en déplacement relatif. La pluralité d'aimants comprend des premiers aimants ayant un premier vecteur de magnétisation sensiblement perpendiculaire aux surfaces en regard et étant séparés deux à deux par un deuxième aimant ayant un deuxième vecteur de magnétisation sensiblement perpendiculaire aux premiers vecteurs de magnétisation des deux premiers aimants entre lesquels se trouve le deuxième aimant. Les aimants ont des largeurs telles que les premiers aimants sont espacés deux à deux d'une première distance inférieure à une deuxième distance séparant deux à deux les deuxièmes aimants et les premiers aimants ont une longueur mesurée selon une direction perpendiculaire à leur largeur et localement parallèle aux surfaces en regard qui est supérieure à une longueur des deuxièmes aimants mesurée selon une direction perpendiculaire à leur largeur et localement parallèle aux surfaces en regard, la longueur des deuxièmes aimants étant 70% environ celle des premiers aimants.

Cet agencement des aimants permet d'optimiser et de concentrer le flux magnétique produit par les premiers aimants en réduisant le chemin de retour du flux magnétique qui passe par les deuxièmes aimants. La plus faible largeur des deuxièmes aimants permet de manière surprenante une augmentation des courants de Foucault engendrés et donc une augmentation du couple de freinage fourni. Cela présente en outre l'avantage de limiter la masse et l'encombrement du dispositif.

L'invention concerne également une roue freinée équipée d'un tel dispositif et un atterrisseur équipé d'une telle roue.

D'autres caractéristiques et avantages de l'invention ressortiront à la lecture de la description qui suit de modes de réalisation particuliers et non limitatifs de l'invention.

### BREVE DESCRIPTION DES DESSINS

Il sera fait référence aux dessins annexés, parmi lesquels :
[Fig. 1] la figure 1 est une vue schématique partielle d'un aéronef équipé d'atterrisseur selon l'invention ;
[Fig. 2] la figure 2 est une vue schématique partielle, en coupe axiale, d'une roue équipée d'un dispositif de freinage selon un premier mode de réalisation de l'invention ;
[Fig. 3] la figure 3 est une vue schématique partielle, en coupe axiale, d'une roue équipée d'un dispositif de freinage selon un deuxième mode de réalisation de l'invention ;
[Fig. 4] la figure 4 est une vue schématique partielle d'un agencement d'aimants selon un mode de réalisation particulier de l'invention.

### DESCRIPTION DETAILLEE DE L'INVENTION

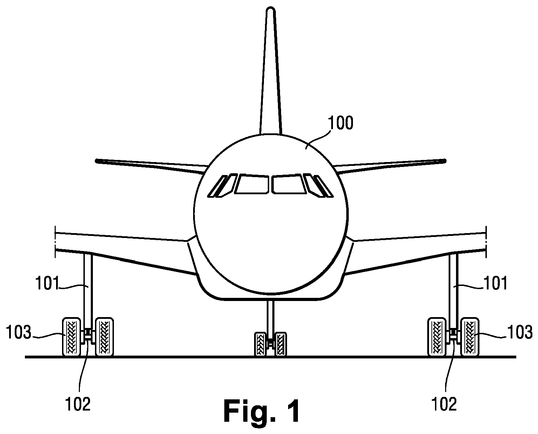

En référence aux figures 1 à 3, le système de freinage selon l'invention est porté par un aéronef 100 comportant des atterrisseurs 101. Chaque atterrisseur 101 comporte une jambe ayant une extrémité pourvue de deux arbres 102 coaxiaux sur chacun desquels est monté pour pivoter une roue 103. Chaque roue 103 comporte de façon connue en soi un moyeu 104 monté pour pivoter sur l'arbre 102 et une jante 105 reliée au moyeu 104 par un voile 106.

Selon l'invention, les roues 103 sont équipées d'un dispositif de freinage magnétique généralement désigné en 1. Le dispositif de freinage magnétique 1 comprend des éléments fixes, ou stators 2, et des éléments mobiles, ou rotors 3.

Plus précisément ici, les stators 2 et les rotors 3 sont en forme de disques, coaxiaux à la roue 103, ayant donc des axes centraux colinéaires. Les stators 2 sont liés en rotation à l'arbre 103 ou à la jambe 102, ici par l'intermédiaire d'un tube de torsion 4, tandis que les rotors 3 sont liés en rotation à la roue 104, par exemple à la jante de la roue 104. Ainsi, dans chaque paire, chaque rotor 3 tourne sur lui-même autour de son axe central par rapport au stator 2 : pendant ce déplacement du rotor 3 selon une direction circonférentielle, la face principale 3.1 reste en regard de la face principale 2.1 et parallèle à celle-ci.

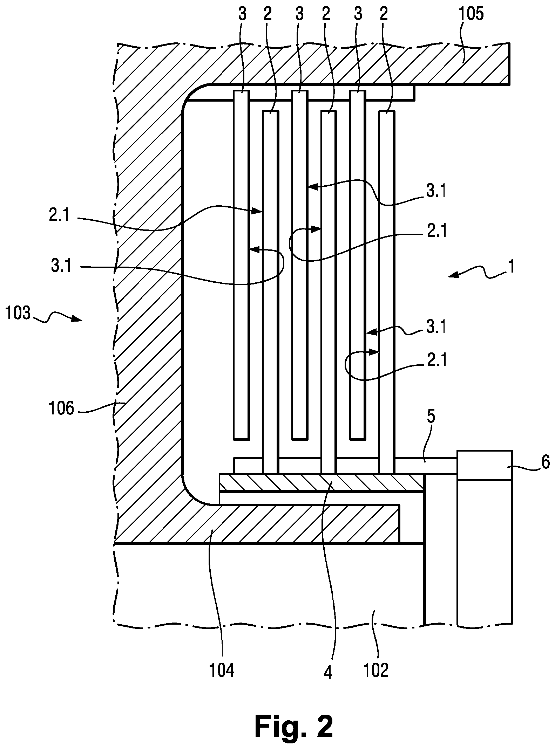

Selon le premier mode de réalisation du dispositif de freinage représenté sur la figure 2, les stators 2 et les rotors 3 sont agencés par paires : chaque stator 2 a une face principale 2.1 s'étendant en regard d'une face principale 3.1 d'un des rotors 3. Les faces 2.1, 3.1 sont parallèles les unes aux autres.

Les stators 2 sont montés sur une glissière 5 coulissant sur le tube torsion 4 pour être mobile selon une direction axiale du tube de torsion 4 entre une première position dans laquelle le rotor 3 et le stator 2 de chaque paire sont rapprochés l'un de l'autre et ont leurs faces principales 3.1, 2.1 séparées par un premier entrefer prédéterminé et une deuxième position dans laquelle le rotor 3 et le stator 2 de chaque paire sont écartés l'un de l'autre et ont leurs faces principales 3.1, 2.1 séparées par un deuxième entrefer prédéterminé supérieur au premier entrefer prédéterminé. Au moins un actionneur électromécanique 6 commandable par le pilote de l'avion de manière connue en elle-même déplace la glissière 6 entre les deux positions précitées. Il est prévu une butée axiale, de type butée à roulement ou butée à aiguilles, interposée entre les rotors 3 et les stators 2 pour s'assurer que les stators 2 ne puissent être rapprochés des rotors 3 au-delà du premier entrefer.

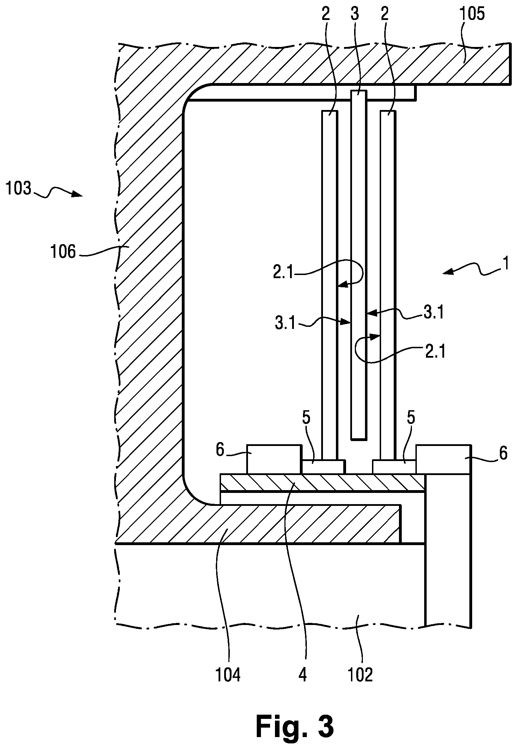

Selon le deuxième mode de réalisation du dispositif de freinage représenté sur la figure 3, les stators 2 et les rotors 3 sont agencés par triplets dont un seul est représenté ici : chaque rotor 3 est disposé entre deux stators 2 ayant chacun une face principale 2.1 s'étendant en regard d'une face principale 3.1 du rotor 3. Les faces 2.1, 3.1 sont parallèles les unes aux autres.

Les stators 2 sont liés en rotation à l'arbre 102 ou à la jambe de l'atterrisseur 101, ici par l'intermédiaire d'un tube de torsion 4, tandis que les rotors 3 sont liés en rotation à la roue 103, ici à la jante 105 de la roue 103. Ainsi, dans chaque triplet, chaque rotor 3 tourne sur lui-même autour de son axe central par rapport aux stators 2 qui l'encadrent : pendant ce déplacement du rotor 3 selon une direction circonférentielle, les faces principales 3.1 restent en regard des faces principales 2.1 et parallèles à celles-ci.

Chacun des stators 2 est monté sur une glissière 5 coulissant (sans rotation) sur le tube de torsion 4 pour être mobile selon une direction axiale du tube de torsion 4 entre une première position dans laquelle le rotor 3 et le stator 2 sont rapprochés l'un de l'autre et ont leurs faces principales 3.1, 2.1 séparées par un premier entrefer prédéterminé et une deuxième position dans laquelle le rotor 3 et le stator 2 sont écartés l'un de l'autre et ont leurs faces principales 3.1, 2.1 séparées par un deuxième entrefer prédéterminé supérieur au premier entrefer prédéterminé. Au moins un actionneur électromécanique 6, commandable par le pilote de l'avion de manière connue en elle-même, déplace la glissière 5 entre les deux positions précitées. Il est prévu une butée axiale, de type butée à roulement ou butée à aiguilles, interposée entre les rotors 3 et les stators 2 (ou entre des parties liées à ceux-ci) pour s'assurer que les stators 2 ne puissent être rapprochés des rotors 3 au-delà du premier entrefer.

Dans ces deux modes de réalisation, les rotors 3 et stators 2 sont constitués de la même manière.

Les rotors 3 sont en cuivre ou en tout autre matériau électriquement conducteur.

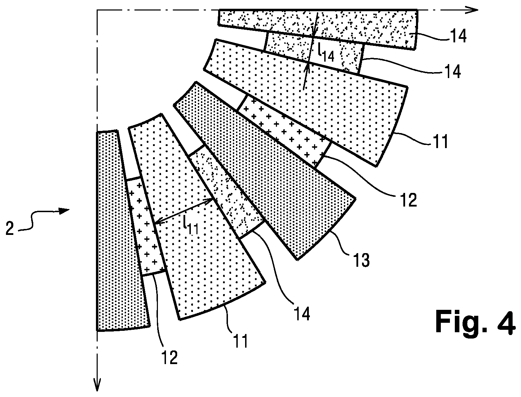

En référence aux figures 4 et 5 également, chaque stator 2 comporte une pluralité d'aimants aptes à engendrer des courants de Foucault dans le rotor 3 lorsque le stator 2 est dans la première position et que le rotor 3 pivote en face du stator 2. Les aimants, ici à base de terres rares, sont par exemple au nombre de 16 et sont de préférence fixés sur un support en acier magnétique, voire sur un support non magnétique. L'épaisseur du support étant de préférence relativement faible tout en satisfaisant les contraintes thermiques et mécaniques.

La pluralité d'aimants comprend des premiers aimants 11, 13 ayant un premier vecteur de magnétisation sensiblement perpendiculaire à la face principale 2.1 et étant séparés deux à deux par un deuxième aimant 12, 14 ayant un deuxième vecteur de magnétisation sensiblement perpendiculaire aux premiers vecteurs de magnétisation des deux premiers aimants 11, 13 entre lesquels se trouve le deuxième aimant 12, 14. Plus précisément, les aimants 11, 12, 13, 14 ont des formes de secteurs angulaires et ont une longueur L mesurée selon une direction radiale du stator 2 et une largeur moyenne l mesurée selon une direction localement tangentielle des disques (c'est-à-dire perpendiculairement à la direction de la longueur L) à moitié de ladite longueur L. Les longueurs L et largeurs 1 sont mesurées selon des directions localement parallèles aux surfaces en regard (les faces principales 2.1, 3.1).

Les aimants 11, 12, 13, 14 sont disposés selon un motif de Halbach, en alternance selon la direction circonférentielle du stator 2 comme suit : un aimant 11, un aimant 12, un aimant 13, un aimant 14, un aimant 11, un aimant 12, un aimant 13, un aimant 14, un aimant 11 et ainsi de suite... On rappelle que le vecteur de magnétisation indique la direction du champ magnétique engendré par un aimant et s'étend dans l'aimant du pôle Sud au pôle Nord. En l'occurrence :
- chaque aimant 11 a son vecteur de magnétisation qui sort de la face principale 2.1 (son pôle Nord débouche sur la face principale 2.1),
- chaque aimant 12 a son vecteur de magnétisation qui s'étend depuis l'aimant 11 voisin vers l'aimant 13 voisin,
- chaque aimant 13 a son vecteur de magnétisation qui rentre dans la face principale 2.1 (son pôle Sud débouche sur la face principale 2.1),
- chaque aimant 14 a son vecteur de magnétisation qui s'étend depuis l'aimant 11 voisin vers l'aimant 13 voisin.

On comprend que les aimants 12, 14 disposés de chaque côté d'un même aimant 11 ont leur vecteur de magnétisation dans des sens opposés.

Les aimants 11, 12, 13, 14 ont des largeurs l₁₁, l₁₂, l₁₃, l₁₄ telles que les premiers aimants 11, 13 sont espacés deux à deux d'une première distance inférieure à une deuxième distance séparant deux à deux les deuxièmes aimants 12, 14. Les meilleurs résultats sont obtenus lorsque la largeur l₁₂, l₁₄ des deuxièmes aimants 12, 14 est 70% environ celles l₁₁, l₁₃ des premiers aimants 11, 13.

En référence à la figure 4, les longueurs L₁₁, L₁₃ des aimants 11, 13 sont identiques les unes aux autres et les longueurs L₁₂, L₁₄ des aimants 12, 14 sont identiques les unes aux autres. Les longueurs L₁₁, L₁₃ des aimants 11, 13 sont supérieures aux longueurs L₁₂, L₁₄ des aimants 12, 14. De préférence, la longueur L₁₂, L₁₄ des deuxièmes aimants 12, 14 est 70% celle des premiers aimants 11, 13.

Dans l'agencement représenté sur la figure 4, les aimants 12, 14 sont positionnés symétriquement sur un cercle passant par le centre géométrique des pôles Nord des aimants 11 et Sud des aimants 13.

On comprend que les aimants 12, 14 occupent sur la face principale 3.1 une surface moindre que celle des aimants 11, 13.

L'agencement des aimants 11, 12, 13, 14 permet d'optimiser et de concentrer le flux magnétique produit par les aimants 11, 13 en réduisant le chemin de retour du flux magnétique qui passe par les aimants 12, 14 et non par le support dont la masse peut être réduite puisqu'il n'a pas besoin d'assurer une fonction de conduction du flux magnétique.

Par rapport à l'art antérieur, l'invention permet une augmentation du couple de freinage fourni tout en limitant la masse et l'encombrement du dispositif.

En outre, la fabrication des deuxièmes aimants est facilitée.

On comprend que pour provoquer le freinage, les actionneurs électromécaniques de commande sont pilotés pour amener les stators 2 dans la première position et que, pour interrompre le freinage, les actionneurs électromécaniques de commande sont pilotés pour amener les stators 2 dans la deuxième position, position dans laquelle les aimants ne permettent pas d'engendrer dans les rotors des courants de Foucault suffisants pour provoquer le freinage des rotors. On notera qu'en dessous d'une certaine vitesse de rotation des rotors 3, le couple de freinage est négligeable quelle que soit la position des stators. Il faudra alors éventuellement envisager un frein additionnel.

Bien entendu, l'invention n'est pas limitée aux modes de réalisation décrits mais englobe toute variante entrant dans le champ de l'invention telle que définie par les revendications.

En particulier, le dispositif peut avoir une structure différente de celle décrite.

Les aimants peuvent être portés par le rotor au lieu du stator.

La forme et les dimensions des aimants peuvent être différentes de celles décrites. De préférence, les premiers aimants 11, 13 représenteront 70% environ de la surface de l'élément qui les porte mais ce n'est pas obligatoire.

Le nombre de rotors et/ou le nombre de stators peuvent être différents de ceux mentionnés.

Le dispositif décrit est à flux axial mais l'invention est applicable à un fonctionnement en flux radial. Ainsi, bien que le rotor et le stator aient été décrits sous la forme de disques parallèles et en regard l'un de l'autre, le stator et le rotor peuvent avoir d'autres formes. Ils peuvent par exemple être agencés sous la forme d'un tambour externe et d'un tambour interne engagé dans le tambour externe de telle manière que le tambour interne ait une surface extérieure en regard d'une surface intérieure du tambour externe. Les aimants sont portés par la surface externe du tambour interne ou par la surface interne du tambour externe.

Le dispositif de freinage magnétique selon l'invention peut être associé à un dispositif de freinage à friction classique qui comprend des organes de friction, par exemple une pile de disques de carbone, et une pluralité d'actionneurs électromécaniques portés par un porte-actionneurs. Chaque actionneur électromécanique comprend un moteur électrique et un poussoir apte à être déplacé par le moteur électrique pour presser la pile de disques. L'actionneur électromécanique est ainsi destiné à produire un effort de freinage commandé sur la pile de disques. Un mode de pilotage des dispositifs de freinage est par exemple connu du document FR-A-2953196.

En variante, les aimants peuvent être directement fixés sur les disques rotoriques ou les disques statoriques du frein à friction pour ralentir la roue par un freinage magnétique quand les disques sont écartés les uns des autres d'un entrefer adéquat.

Il est possible d'utiliser pour l'actionnement mécanique du dispositif de freinage magnétique un actionneur distinct pour chaque stator plutôt qu'un actionneur agissant sur une glissière portant plusieurs stators.

D'autres modes d'actionnement du frein magnétique sont envisageables : mécaniques par exemple en déplacement axialement les rotors et non plus les stators, ou électromagnétiques au moyen de bobines engendrant un champ magnétique annulant celui des aimants permanents.

L'invention est utilisable sur tout type de véhicule.

La longueur des deuxièmes aimants (12, 14) est 70% environ celle des premiers aimants (11, 13), c'est-à-dire 70% à quelques dixièmes de pourcent ou à quelques pourcents près.

## Revendications

1. Dispositif de freinage magnétique à courant de Foucault, comprenant au moins un élément fixe (2) et un élément mobile (3) par rapport à l'élément fixe (2) selon une direction de déplacement en ayant une surface (3.1) en regard d'une surface de l'élément fixe (2), l'un (2) des éléments comportant une pluralité d'aimants (11, 12, 13, 14) apte à engendrer dans l'autre (3) des éléments, réalisé en matériau électriquement conducteur, des courants de Foucault, lorsque les deux éléments (2, 3) sont en déplacement relatif, dans lequel la pluralité d'aimants comprend des premiers aimants (11, 13) et des deuxièmes aimants (12, 14) disposés en alternance, les premiers aimants (11, 13) ayant un premier vecteur de magnétisation sensiblement perpendiculaire aux surfaces en regard (2.1, 3.1) et chacun des deuxièmes aimants (12, 14) ayant un deuxième vecteur de magnétisation sensiblement perpendiculaire aux premiers vecteurs de magnétisation de deux premiers aimants (11, 13) entre lesquels il se trouve et les aimants (11, 12, 13, 14) ayant des largeurs telles que les premiers aimants (11, 13) sont espacés deux à deux d'une première distance inférieure à une deuxième distance séparant deux à deux les deuxièmes aimants (12, 14) et **caractérisé en ce que** les premiers aimants (11, 13) ont une longueur mesurée selon une direction perpendiculaire à leur largeur et localement parallèle aux surfaces en regard (2.1, 3.1) qui est supérieure à une longueur des deuxièmes aimants (12, 14) mesurée selon une direction perpendiculaire à leur largeur et localement parallèle aux surfaces en regard (2.1, 3.1), la longueur des deuxièmes aimants (12, 14) étant 70% environ celle des premiers aimants (11, 13).

2. Dispositif selon la revendication 1, dans lequel la largeur des deuxièmes aimants (12, 14) est 70% environ celle des premiers aimants (11, 13).

3. Dispositif selon la revendication 1, dans lequel les premiers aimants (11, 13) représentent 70% environ de la surface (2.1) de l'élément (2) qui les porte.

4. Dispositif selon la revendication 1, dans lequel les éléments (2, 3) ont une forme de disque et ont des axes centraux colinéaires, l'élément mobile (3) ayant une face principale (3.1) en regard d'une face principale (2.1) de l'élément fixe (2) formant ainsi les surfaces en regard et l'élément mobile (3) pivotant sur son axe central, chaque premier vecteur s'étendant perpendiculairement aux faces principales (2.1, 3.1) et chaque deuxième vecteur de magnétisation s'étendant parallèlement aux faces principales (2.1, 3.1) et à une direction localement tangente à l'élément (2) pourvu des aimants, la largeur de chaque aimant (11, 12, 13, 14) étant mesurée selon une direction localement tangente à l'élément (2) en question.

5. Dispositif selon la revendication 4, dans lequel les aimants (11, 12, 13, 14) ont une forme de secteur angulaire et les premiers aimants (11, 13) ont une dimension radiale supérieure à une dimension radiale des deuxièmes aimants (12, 14).

6. Dispositif selon l'une quelconque des revendications précédentes, dans lequel les aimants (11, 12, 13, 14) sont disposés selon un motif de Halbach.

7. Dispositif selon l'une quelconque des revendications précédentes, dans lequel les aimants (11, 12, 13, 14) sont portés par l'élément fixe (2).

8. Roue (104) freinée de véhicule comportant un dispositif de freinage selon l'une quelconque des revendications précédentes, comportant une jante, un voile ou un moyeu auquel l'élément mobile (3) du dispositif de freinage est lié en rotation.

9. Atterrisseur (101) comprenant une jambe (102) ayant une extrémité portant un arbre (103) sur lequel est monté le moyeu d'une roue (104) selon la revendication 8, l'élément fixe (2) du dispositif de freinage étant lié en rotation à la jambe (102).

## Patentansprüche

1. Magnetische Wirbelstrombremsvorrichtung, umfassend zumindest ein feststehendes Element (2) und ein bewegliches Element (3), das entlang einer Bewegungsrichtung in Bezug auf das feststehende Element (2) beweglich ist und eine Fläche (3.1) aufweist, die der Fläche des feststehenden Elements (2) gegenüberliegt, wobei das eine Element (2) aus den Elementen eine Mehrzahl von Magneten (11, 12, 13, 14) enthält, die dazu dienen, in dem anderen Element (3) aus den Elementen, das aus einem elektrisch leitfähigen Material besteht, Wirbelströme zu erzeugen, wenn sich beide Elemente (2, 3) relativ zueinander bewegen, wobei die Mehrzahl von Magneten erste Magnete (11, 13) und zweite Magnete (12, 14) umfasst, die abwechselnd zueinander angeordnet sind, wobei die ersten Magnete (11, 13) einen ersten Magnetisierungsvektor aufweisen, der im Wesentlichen senkrecht zu den einander gegenüberliegenden Flächen (2.1, 3.1) verläuft, und ein jeder der zweiten Magnete (12, 14) einen zweiten Magnetisierungsvektor aufweist, der im Wesentlichen senkrecht zu den ersten Magnetisierungsvektoren der beiden ersten Magnete (11, 13) verläuft, zwischen denen er sich befindet, und die Magnete (11, 12, 13, 14) derart breit ausgebildet sind, dass die ersten Magnete (11, 13) jeweils paarweise durch eine erste Distanz beabstandet sind, die kleiner ist als eine zweite Distanz, durch welche die zweiten Magnete (12, 14) jeweils paarweise beabstandet sind, und **dadurch gekennzeichnet, dass** die ersten Magnete (11, 13), gemessen entlang einer Richtung senkrecht zu ihrer Breite und lokal parallel zu den einander gegenüberliegenden Flächen (2.1, 3.1) eine Länge aufweisen, die größer ist als eine Länge der zweiten Magnete (12, 14), gemessen entlang einer Richtung senkrecht zu ihrer Breite und lokal parallel zu den einander gegenüberliegenden Flächen (2.1, 3.1), wobei die Länge der zweiten Magnete (12, 14) etwa 70% der Länge der ersten Magnete (11, 13) beträgt.

2. Vorrichtung nach Anspruch 1, wobei die Breite der zweiten Magnete (12, 14) etwa 70% der Breite der ersten Magnete (11, 13) beträgt.

3. Vorrichtung nach Anspruch 1, wobei die ersten Magnete (11, 13) etwa 70% der Fläche (2.1) des sie tragenden Elements (2) darstellen.

4. Vorrichtung nach Anspruch 1, wobei die Elemente (2, 3) scheibenförmig ausgebildet sind und kollineare Mittelachsen besitzen, wobei das bewegliche Element (3) eine Hauptfläche (3.1) aufweist, die der Hauptfläche (2.1) des feststehenden Elements (2.1) gegenüberliegt, wodurch die einander gegenüberliegenden Flächen gebildet werden, und das bewegliche Element (3) um seine Mittelachse verschwenkbar ist, wobei jeder erste Vektor senkrecht zu den Hauptflächen (2.1, 3.1) verläuft und jeder zweite Magnetisierungsvektor parallel zu den Hauptflächen (2.1, 3.1) und zu einer lokal tangentialen Richtung in Bezug auf das mit den Magneten ausgestattete Element (2) verläuft, wobei die Breite jedes Magneten (11, 12, 13, 14) entlang einer lokal tangentialen Richtung in Bezug auf das betreffende Element (2) gemessen wird.

5. Vorrichtung nach Anspruch 4, wobei die Magnete (11, 12, 13, 14) winkelsektorförmig ausgebildet sind und die ersten Magnete (11, 13) eine radiale Abmessung aufweisen, die größer ist als eine radiale Abmessung der zweiten Magnete (12, 14).

6. Vorrichtung nach einem der vorhergehenden Ansprüche, wobei die Magnete (11, 12, 13, 14) gemäß einem Halbach-Array angeordnet sind.

7. Vorrichtung nach einem der vorhergehenden Ansprüche, wobei die Magnete (11, 12, 13, 14) von dem feststehenden Element (2) getragen sind.

8. Gebremstes Rad (104) eines Fahrzeugs, enthaltend eine Bremsvorrichtung nach einem der vorhergehenden Ansprüche, enthaltend eine Felge, eine Radscheibe oder eine Nabe, mit welcher das bewegliche Element (3) der Bremsvorrichtung drehfest verbunden ist.

9. Fahrwerk (101), umfassend ein Bein (102) mit einem Ende, das eine Welle (103) trägt, auf welcher die Nabe eines Rades (104) nach Anspruch 8 angebracht ist, wobei das feststehende Element (2) der Bremsvorrichtung drehfest mit dem Bein (102) verbunden ist.

## Claims

1. Eddy current magnetic braking device, comprising at least one stationary element (2) and one movable element (3) with respect to the stationary element (2) in a movement direction, by having a surface (3.1) opposite a surface of the stationary element (2), one (2) of the elements comprising a plurality of magnets (11, 12, 13, 14) capable of generating eddy currents in the other (3) of the elements, made of electrically conductive material, when the two elements (2, 3) are in relative movement, wherein the plurality of magnets comprises first magnets (11, 13) and second magnets (12, 14) disposed alternating, the first magnets (11, 13) having a first magnetisation vector substantially perpendicular to the opposite surfaces (2.1, 3.1) and each of the second magnets (12, 14) having a second magnetisation vector substantially perpendicular to the first magnetisation vectors of two first magnets (11, 13), between which it is located, and the magnets (11, 12, 13, 14) have widths such that the first magnets (11, 13) are spaced apart in pairs by a first distance less than a second distance separating the second magnets (12, 14) in pairs, **characterized in that** the first magnets (11, 13) have a length measured in a direction perpendicular to their width and locally parallel to the opposite surfaces (2.1, 3.1) which is greater than a length of the second magnets (12, 14) measured in a direction perpendicular to their width and locally parallel to the opposite surfaces (2.1, 3.1), the length of the second magnets (12, 14) being around 70% that of the first magnets (11, 13).

2. Device according to claim 1, wherein the width of the second magnets (12, 14) is around 70% that of the first magnets (11, 13).

3. Device according to claim 1, wherein the first magnets (11, 13) represent around 70% of the surface (2.1) of the element (2) which carries them.

4. Device according to claim 1, wherein the elements (2, 3) have a disc shape and have colinear central axes, the movable element (3) having a main face (3.1) opposite a main face (2.1) of the stationary element (2), thus forming the opposite surfaces and the movable element (3) pivoting on its central axis, each first vector extending perpendicularly to the main faces (2.1, 3.1), and each second magnetisation vector extending parallel to the main faces (2.1, 3.1) and to a direction locally tangent to the element (2) provided with magnets, the width of each magnet (11, 12, 13, 14) being measured in a direction locally tangential to the element (2) in question.

5. Device according to claim 4, wherein the magnets (11, 12, 13, 14) have an angular sector shape and the first magnets (11, 13) have a radial dimension greater than a radial dimension of the second magnets (12, 14).

6. Device according to any one of the preceding claims, wherein the magnets (11, 12, 13, 14) are disposed according to a Halbach pattern.

7. Device according to any one of the preceding claims, wherein the magnets (11, 12, 13, 14) are carried by the stationary element (2).

8. Braked vehicle wheel (104) comprising a braking device according to any one of the preceding claims, comprising a rim, a wall or a hub to which the movable element (3) of the braking device is rotatably linked.

9. Landing gear (101) comprising a strut (102) having an end carrying a shaft (103), on which the hub of a wheel (104) is mounted according to claim 8, the stationary element (2) of the braking device being rotatably linked to the strut (102).
